# EUROPÄISCHE PATENTSCHRIFT

(11) **EP 1 646 442 B1**
(45) Veröffentlichungstag und Bekanntmachung des Hinweises auf die Patenterteilung: **18.01.2012**
(21) Anmeldenummer: 04740913.1
(22) Anmeldetag: 12.07.2004
(51) Int. Cl.: B01D 53/14, B01D 53/52, C01B 17/04

(54) **VERFAHREN ZUR ENTFERNUNG VON SCHWEFELWASSERSTOFF UND WEITEREN SAUERGASKOMPONENTEN AUS UNTER DRUCK BEFINDLICHEN, TECHNISCHEN GASEN**
METHOD FOR REMOVING HYDROGEN SULPHIDE AND OTHER ACIDIC GAS COMPONENTS FROM PRESSURISED TECHNICAL GASES
PROCEDE D'ELIMINATION D'HYDROGENE SULFURE ET D'AUTRES CONSTITUANTS GAZEUX ACIDES DE GAZ TECHNIQUES SE TROUVANT SOUS PRESSION

(30) Priorität: 16.07.2003 DE 10332427
(43) Veröffentlichungstag der Anmeldung: 19.04.2006
(73) Patentinhaber: ThyssenKrupp Uhde GmbH, 44141 Dortmund (DE)
(72) Erfinder: SÄCKER, Georg, 44149 Dortmund (DE); MENZEL, Johannes, 45731 Waltrop (DE)
(86) Internationale Anmeldenummer: PCT/EP2004/007654
(87) Internationale Veröffentlichungsnummer: WO 2005/007271

(56) Entgegenhaltungen:
- EP-A- 0 455 285
- EP-A- 0 520 316
- DE-A- 2 329 608
- US-A- 4 425 317

## Beschreibung

Die Erfindung betrifft ein Verfahren zur Entfernung von Schwefelwasserstoff und weiteren Sauergaskomponenten aus unter Druck befindlichen, technischen Gasen mittels eines physikalischen Waschmittels sowie die Gewinnung von Schwefel aus Schwefelwasserstoff unter Einsatz einer Claus-Anlage sowie die Reduzierung von CO-Emissionen.

Schwefelkomponenten werden aus technischen Gasen bei erhöhtem Druck (20 - 60 bar) mittels physikalisch wirkender Absorptionsmittel, z.B. Rectisol, Selexol, Genosorb, Morphysorb, in Bezug auf auch vorhandenes CO₂ selektiv entfernt. Bei der Regeneration entstehen neben dem gereinigten Gasstrom mindestens zwei Regenerationsgasströme bei niedrigem Druck (1 - 3 bar), die die entfernten Sauergaskomponenten enthalten: einer angereichert mit Schwefelwasserstoff und entstammend einer thermischen Regenerationskolonne, ein weiterer (oder mehrere weitere) angereichert mit Kohlendioxid und bis auf Spuren frei von Schwefelwasserstoff und entstammend einer nicht-thermischen Regenerationskolonne, wobei die Trägergasregeneration z.B. mittels Stickstoff bewirkt werden kann, und gegebenenfalls noch ein weiterer Strom angereichert mit Kohlendioxid, entstammend einer Flashkolonne ohne zusätzlichen Eintrag von Regenerationsenergie oder Regenerationsträgergas.

Der mit Schwefelwasserstoff angereicherte Strom wird einer Anlage zur Erzeugung von Elementarschwefel mittels katalytischer Reaktion nach dem Clausprozess zugeführt. Neben dem elementaren Schwefel entsteht in diesem Prozess ein Restgas bei nahezu atmosphärischem Druck (0,9 - 1,5 bar), das nicht umgesetzte Schwefelkomponenten, wie Schwefelwasserstoff und Schwefeldioxid, sowie Wasserstoff, Kohlendioxid, Kohlenmonoxid und Stickstoff enthält. Um höhere geforderte Schwefelumsetzungsgrade (> ca. 95%) zu erreichen, wird das Restgas des Clausprozesses mittels verschiedenartiger Prozesse in nachgeschalteten Anlagen bis zum Erreichen des erforderlichen Umsatzgrades entschwefelt, gegebenenfalls nachverbrannt und dann in die Atmosphäre emittiert.

Alternativ kann nach dem Stand der Technik das Restgas aus der Clausanlage zunächst einer katalytischen Hydrierung zugeführt werden, bei der primär Schwefeldioxid sowie weitere nicht reduzierte Schwefelkomponenten zu Schwefelwasserstoff umgesetzt werden, wobei diese anschließend mittels Kompression in den zu entschwefelnden Hauptgasstrom in die Absorptionskolonne bei erhöhtem Druck (s.o. 20 - 60 bar) oder in den Regenerationsteil bei leicht erhöhtem Druck (s.o. 1 - 3 bar) zurückgeführt werden. Diese Rückführung der in dem Clausprozess nicht umgesetzten Schwefelkomponenten ermöglicht einen nahezu 100%igen Schwefel umsatz der aus dem Hauptgasstrom entfernten Schwefelkomponenten.

Als nachteilig erweist sich im ersten Fall die für die Kompression des Restgases aufzuwendende Kompressionsenergie, verbunden mit hohen Investitionskosten für Kompressoren mit einer Druckerhöhung von nahezu atmosphärischem Druck auf den Druck des Hauptgasstromes (s.o. 20 - 60 bar) sowie - insbesondere bei kleinem Restgasvolumenstrom und großer Druckerhöhung - die Auswahl eines Kompressortyps, der den betrieblichen Anforderungen gerecht wird, etwa dem Umstand, dass sich in Spuren vorhandener Elementarschwefel ablagern kann.

Im zweiten Fall erweist es sich als nachteilig, dass das aus der nicht-thermischen Regenerationskolonne entstammende Regenerationsgas eine CO-Konzentration aufweist, die es oft nicht erlaubt, diesen Strom in unschädlicher und legitimer Weise in die Atmosphäre abzuleiten.

Die Aufgabe der Erfindung ist daher, das Verfahren dahingehend zu verbessern, dass einerseits eine Abgabe schädlichen Abgases an die Atmosphäre vermieden wird und andererseits eine Verdichtung des Restgases auf den Druck des Hauptgasstroms nicht mehr erforderlich ist.

Die Erfindung löst die Aufgabe dadurch, dass zur Entfernung von Schwefelwasserstoff und weiteren Sauergaskomponenten aus unter Druck befindlichen, technischen Gasen mittels eines physikalischen Waschmittels sowie Gewinnung von Schwefel aus Schwefelwasserstoff unter Einsatz einer Claus-Anlage
- der Schwefelwasserstoff und die weiteren Sauergaskomponenten in dem physikalischen Waschmittel absorptiv gelöst werden,
- das physikalische Waschmittel einer mehrstufigen Regeneration unterzogen wird.
- die mehrstufige Regeneration jeweils mindestens eine Einrichtung zur H₂S-Anreicherung, eine Einrichtung zur CO₂-Strippung und eine Einrichtung zur thermischen Regeneration aufweist,
- wobei die verschiedenen Regenerationsstufen sowohl untereinander verschiedene Druckstufen als auch gegenüber der Absorption einen geringeren Druck aufweisen,
- ein schwefeiwasserstoffreiches Clausgas aus einer der Regenerationsstufen abgezogen und in eine Clausanlage geleitet wird, wo Schwefel erzeugt wird,
- das die Clausanlage verlassende Restgas hydriert wird und auf einen Druck verdichtet wird, der einer der Regenerationsstufen entspricht,
- die mehrstufige Regeneration jeweils mindestens eine Einrichtung zur CO-Anreicherung mit Flashgaserzeugung aufweist,
- das schwefelwasserstoffreiche Clausgas aus der Einrichtung zur thermischen Regeneration entnommen wird, und
- das die Clausanlage verlassende Restgas verdichtet und in die Einrichtung zur CO-Anreicherung geleitet wird.

In weiteren Ausgestaltungen des Verfahrens kann die Einrichtung zur CO-Anreicherung als Flash-Kolonne ausgeführt und als physikalisches Absorptionsverfahren kann ein Verfahren nach dem Rectisol-, Selexol- oder Morphysorb-Verfahren genutzt werden.

Erfindungsgemäß wird das Restgas des Clausprozesses nach bereits oben beschriebener Hydrierung nicht - wie ebenso oben beschrieben - in den zu entschwefelnden Hauptgasstrom mit dem erhöhten Druck von 20 - 60 bar (s.o.) geführt, sondern ausschließlich In den Regenerationsteil der selektiv ausgelegten, physikalisch wirkenden Sauergasentfemung (Rectisol, Selexol, Genosorb, Morphysorb), und zwar mittels Kompression auf einen Druck nur zwischen 2 und 10 bar, vorzugsweise zwischen 2 und 5 bar. Die jeweilige Druckhöhe und der genaue Einbindungspunkt in die CO-Anreicherung des Regenerationsteils sind abhängig von den erforderlichen bzw. gewünschten Konzentrationen der Gaskomponenten in den Regenerationsgasen.

Hierbei wird durch Druckabsenkung und damit verbundener Flashgaserzeugung vorrangig noch im Lösungsmittel befindliches CO aus dem Lösungsmittel entfernt. Die Druckhöhe in dem Regenerationsteil, also der Absolut-Druck der Flash-Kolonne, sofern eine solche verwendet wird, ist abhängig von der erforderlichen CO-Entfernung aus dem Lösungsmittel. In vorteilhafter Weise wird dabei das im Claus-Restgas vorhandene CO zusammen mit dem noch in der Lösung befindlichen CO sowie zusammen mit einem Teil des ausgeflashten CO₂ über Kopf dieser Kolonne ausgetragen, wobei das auch in dem Claus-Restgas vorhandenen H₂S mittels CO₂ angereicherter Lösung in dieser Stufe reabsorbiert wird, so dass die CO₂/CO-Fraktion nahezu schwefelfrei diese Stufe verläßt.

Der erfindungsgemäße Vorteil besteht darin, dass das Restgas des Clausprozesses nicht auf hohen Druck komprimiert werden muss, da innerhalb einer bezüglich Schwefelwasserstoff und Kohlendioxid selektiv arbeitenden Gaswäsche Anreicherungskolonnen für die einzelnen Gaskomponenten auf niedrigerem Druckniveau gegenüber dem Druck des Hauptgasstromes bereits vorhanden sind und somit das Restgas an entsprechend geeigneter Stelle eingebunden werden kann, ohne dass die Randbedingungen der Regeneration sowie Absorption verändert werden.

Vorteilhaft ist weiterhin, dass bei Einbindung des Restgases in die Flash-Kolonne aus der nachgeschalteten, mit Regenerationsträgergas arbeitenden Kolonne ein mit CO₂ angereichertes Regenerationsgas mit sehr niedriger CO-Konzentration entsteht.

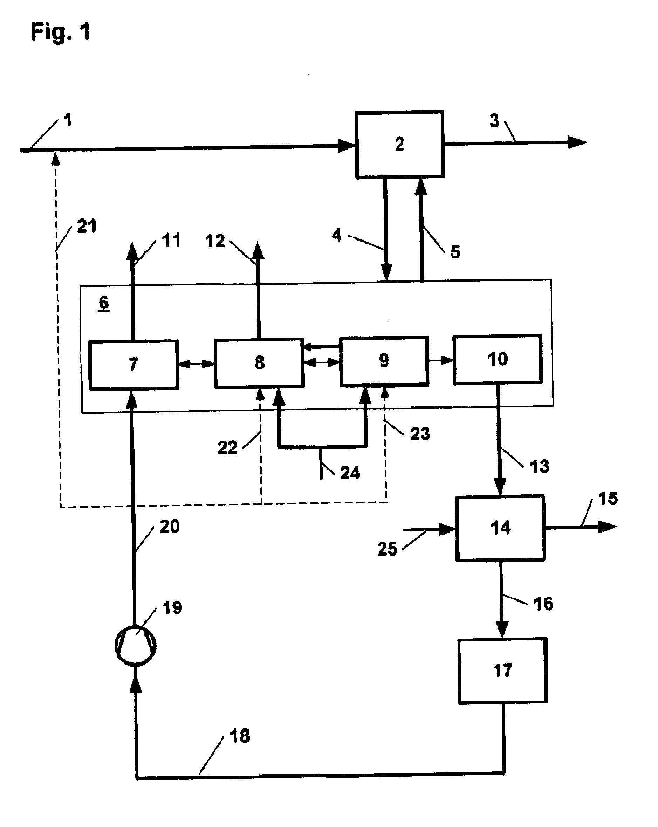

Die Erfindung wird nachfolgend anhand eines vereinfachten Verfahrensschemas in Fig. 1 näher erläutert: Fig. 1 zeigt das erfindungsgemäße Verfahren, angewendet auf einen Rectisol-Prozess, bestehend aus einer Absorption 2, einer mehrstufigen Regeneration 6, einer Clausanlage 14 mit anschließender Hydrierung 17 und einem Kompressor 19, wobei das erfindungsgemäße Verfahren aber nicht auf diese beispielhafte Ausführungsform beschränkt ist.

Das unter einem Druck von 32,8 bar stehende Einsatzgas 1 wird in die Absorption 2 geleitet, wo Schwefelwasserstoff und weitere Sauergaskomponenten wie CO₂ entfernt werden. Das gereinigte Produktgas 3 verlässt die Absorption 2. Das beladene Absorbens 4 wird in die mehrstufige Regeneration 6, bestehend aus der Flash-Kolonne 7, der H₂S-Anreicherung 8 sowie aus der CO₂-Strippung 9 und der thermischen Regeneration 10, geführt, dort regeneriert und als regeneriertes Absorbens 5 in die Absorption 2 recycliert. Der H₂S-Anreicherung 8 und der CO₂-Strippung 9 wird Stickstoff 24 zugeführt. Die Sauergase 11 und 12 enthalten Sauergaskomponenten, vor allem CO und CO₂, und Inertgas in verschiedener Zusammensetzung, sind frei von oder arm an Schwefelkomponenten, und eignen sich für die Verwendung in anderen Anlagenteilen. Das Sauergas 12 ist dabei besonders arm an CO und kann wahlweise auch ganz oder teilweise in die Atmosphäre abgeleitet werden.

Das in der thermischen Regeneration 10 abgeschiedene, mit Schwefelwasserstoff angereicherte Clausgas 13 wird ebenso wie Luft 25 in die Claus-Anlage 14 geführt, wo Schwefel 15 gewonnen wird. Das erhaltene Restgas 16 wird in der Hydrierung 17 hydriert, und das hydrierte Restgas 18 mittels des Kompressors 19 auf einen Druck von 2 - 5 bar verdichtet.

Das verdichtete Restgas 20 wird in die Flash-Kolonne 7 der Regeneration 6 des Rectisolprozesses geführt. Eine Zuführung nach dem herkömmlichen Stand der Technik (in Fig. 1 als gestrichelte Linien dargestellt) in das Einsatzgas 1 als Strom 21 oder in die H₂S-Anreicherung 8 als Strom 22 oder die CO₂-Strippung 9 als Strom 23 ist nicht mehr erforderlich.

Anhand von 2 Rechenbeispielen, bei dem ein typisches Einsatzgas angenommen wurde, werden die Vorteile der Erfindung deutlich, wobei die Ziffern denen in Fig. 1 und der Beschreibung entsprechen. Tabelle 1 zeigt hierbei die erfindungsgemäße Betriebsweise wie oben beschrieben. In Tabelle 2 wird dem ein Rechenbeispiel gegenübergestellt, bei dem kein Strom 20 in die Flash-Kolonne 7 geführt wird, und statt dessen ein Strom 22 in die H₂S-Anreicherung 8 und ein Strom 23 in die CO₂-Strippung 9 gegeben wird. Man erkennt, dass der Sauergasstrom 12 in diesem Fall eine mehr als 2,5 fache CO-Fracht trägt.

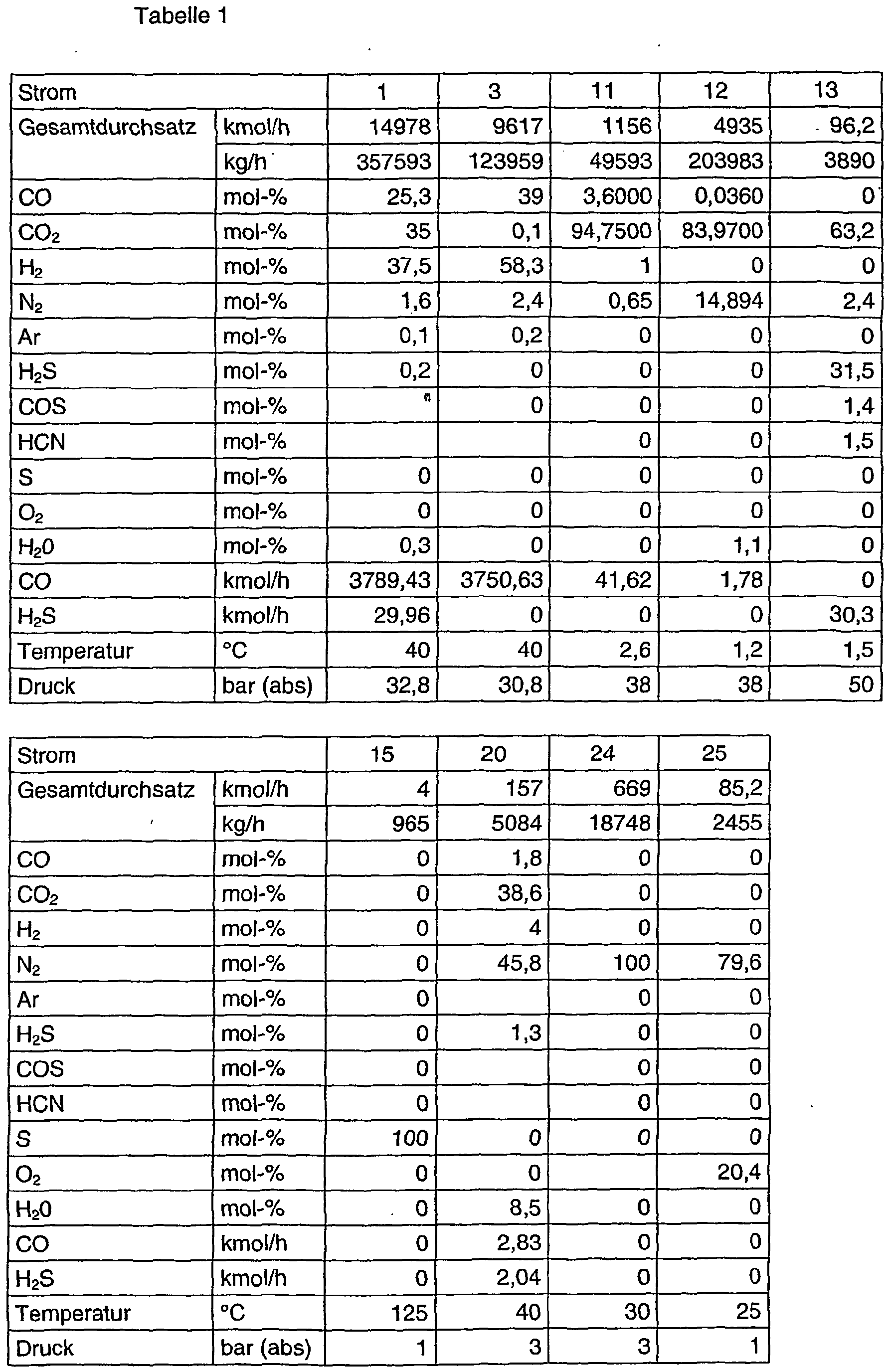

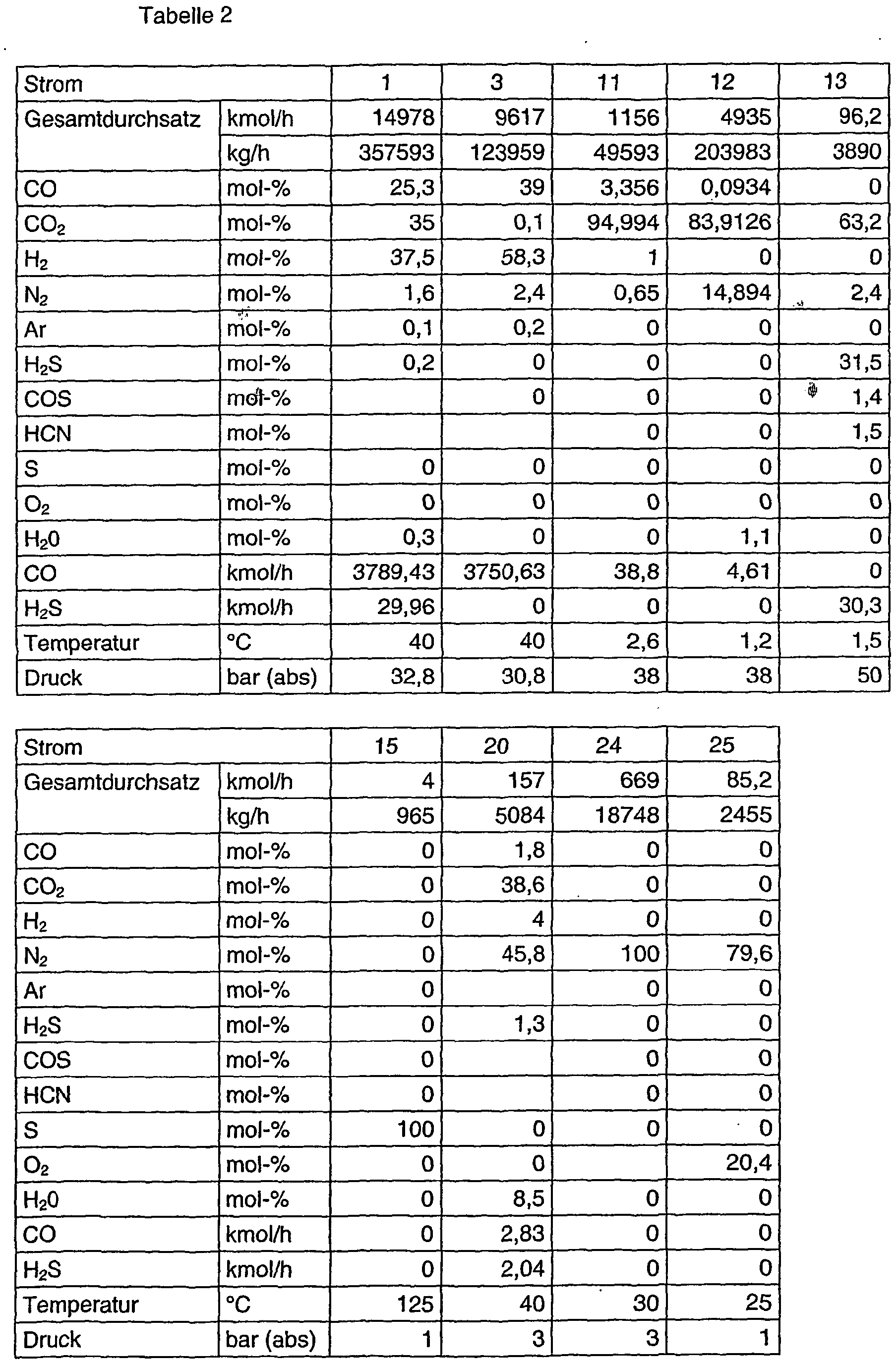

Bezugszeichenliste
- 1: Einsatzgas
- 2: Absorption
- 3: gereinigtes Produktgas
- 4: beladenes Absorbens
- 5: regeneriertes Absorbens
- 6: Regeneration
- 7: Flash-Kolonne
- 8: H₂S-Anreicherung
- 9: CO₂-Strippung
- 10: thermische Regeneration
- 11: Sauergas
- 12: CO-armes Sauergas
- 13: Clausgas
- 14: Claus-Anlage
- 15: Schwefel
- 16: Restgas
- 17: Hydrierung
- 18: hydriertes Restgas
- 19: Kompressor
- 20: verdichtetes Restgas
- 21: Zuführung nach dem Stand der Technik
- 22: Zuführung nach dem Stand der Technik
- 23: Zuführung nach dem Stand der Technik
- 24: Stickstoff
- 25: Luft

## Patentansprüche

1. Verfahren zur Entfernung von Schwefelwasserstoff und weiteren Sauergaskomponenten aus unter Druck befindlichen, technischen Gasen mittels eines Physikalischen Waschmittels sowie Gewinnung von Schwefel aus Schwefelwasserstoff unter Einsatz einer Claus-Anlage, **wobei**
• der Schwefelwasserstoff und die weiteren Sauergaskomponenten in dem physikalischen Waschmittel absorptiv gelöst werden,
• das physikalische Waschmittel einer mehrstufigen Regeneration (6) unterzogen wird.
• die mehrstufige Regeneration jeweils mindestens eine Einrichtung zur H₂S-Anreicherung (8), eine Einrichtung zur CO₂-Strippung (9) und eine Einrichtung zur thermischen Regeneration (10) aufweist,
• wobei die verschiedenen Regenerationsstufen sowohl untereinander verschiedene Druckstufen als auch gegenüber der Absorption einen geringeren Druck aufweisen,
• ein schwefelwasserstoffreiches Clausgas aus einer der Regenerationsstufen abgezogen und in eine Clausanlage (14) geleitet wird, wo Schwefel (15) erzeugt wird,
• das die Clausanlage verlassende Restgas hydriert wird und auf einen Druck verdichtet wird, der einer der Regenerationsstufen entspricht,
• das schwafenvasserstoffreiche Clausgas (13) aus der Einrichtung zur thermischen Regeneration (10) entnommen wird,
**dadurch gekennzeichnet, dass**
• die mehrstufige Regeneration jeweils mindestens eine Einrichtung zur CO-Anreicherung (7) mit Flashgaserzeugung durch Entfernung von im Lösungsmittel befindlichem CO aus dem Lösungsmittel mittels Druckabsenkung aufweist,
• das die Clausanlage (14) verlassende Restgas verdichtet und in die Einrichtung zur CO-Anreicherung (7) geleitet wird.

2. Verfahren nach Anspruch 1, **dadurch gekennzeichnet, dass** die Einrichtung zur CO-Anreicherung (7) als Flash-Kolonne ausgeführt wird.

3. Verfahren nach einem der Ansprüche 1 oder 2. **dadurch gekennzeichnet, dass** als physikalisches Absorptionsverfahren ein Verfahren nach dem Rectisol-, Selexol- oder Morphysorb-Verfahren genutzt wird.

## Claims

1. Process for the removal of hydrogen sulphide and other sour gas components from pressurised industrial gases by means of a physical scrubbing agent and for the recovery of sulphur from hydrogen sulphide using a Claus plant, wherein
• the hydrogen sulphide and the other sour gas components are dissolved by absorption in the physical scrubbing agent;
• the physical scrubbing agent undergoes multi-step regeneration (6);
• the multi-step regeneration unit is equipped with at least one respective device for H₂S enrichment (8), CO₂ stripping (9) and thermal regeneration (10),
• the various regeneration steps operating at pressure levels that differ from each other and are lower than that of the absorption unit,
• a hydrogen sulphide-rich Claus gas is withdrawn from one of the regeneration steps and fed to a Claus plant (14), where sulphur (15) is produced;
• the tail gas leaving the Claus plant undergoes hydrogenation and is compressed to a pressure that corresponds to one of the regeneration steps;
• the hydrogen sulphide-rich Claus gas (13) is withdrawn from the device for thermal regeneration (10),
**characterised in that**
• the multi-step regeneration unit has at least one respective device for CO enrichment (7) with the generation of flash gas due to the removal of CO contained in the solvent from the solvent by means of pressure reduction;
• the tail gas leaving the Claus plant (14) is compressed and fed to the device for CO enrichment (7).

2. Process according to claim 1, **characterised in that** the device for CO enrichment (7) is designed as a flash column.

3. Process according to either of claims 1 or 2, **characterised in that** a process based on the Rectisol, Selexol or Morphysorb process is used as the physical absorption process.

## Revendications

1. Procédé d'élimination d'acide sulfhydrique et d'autres composants de gaz acide provenant de gaz techniques sous pression, au moyen d'un détergent physique et d'obtention de soufre à partir d'acide sulfhydrique en utilisant une installation Claus,
• l'acide sulfhydrique et les autres composants de gaz acide étant dissous par absorption dans l'agent physique,
• le détergent physique étant soumis à une régénération à plusieurs étages (6),
• la régénération à plusieurs étages comportant respectivement au moins un dispositif d'enrichissement en H₂S (8), un dispositif de stripping de CO₂ (9) ainsi qu'un dispositif de régénération thermique (10),
• les différents étages de régénération présentant entre eux différents niveaux de pression et une pression inférieure par rapport à l'absorption,
• un gaz Claus riche en acide sulfhydrique étant soutiré d'un des étages de régénération puis dirigé dans une installation Claus (14) produisant du soufre (15),
• le gaz résiduel sortant de l'installation Claus étant hydrogéné puis densifié à une pression correspondant à un des étages de régénération,
• le gaz Claus riche en acide sulfhydrique (13) étant soutiré du dispositif de régénération thermique (10),
**caractérisé en ce que**
• la régénération à plusieurs étages présente respectivement au moins un dispositif d'enrichissement en CO (7) avec génération de vapeur instantanée par élimination du CO présent dans le solvant par baisse de pression,
• le gaz résiduel sortant de l'installation Claus (14) est densifié puis dirigé dans le dispositif d'enrichissement en CO (7).

2. Procédé selon la revendication 1, **caractérisé en ce que** le dispositif d'enrichissement en CO (7) est conçu en colonne flash.

3. Procédé selon une des revendications 1 ou 2, **caractérisé en ce qu'**un procédé est utilisé comme procédé physique d'absorption après le procédé Rectisol, Selexol ou Morphysorb.
